# EUROPÄISCHE PATENTANMELDUNG

(11) **EP 4 585 807 A1**
(43) Veröffentlichungstag der Anmeldung: **16.07.2025**
(21) Anmeldenummer: 25176783.6
(22) Anmeldetag: 15.05.2025
(51) Int. Cl.: F04D 19/04, F16K 51/02

(54) **VAKUUMSYSTEM UND VERFAHREN ZUM BETREIBEN EINES SOLCHEN**

(71) Anmelder: Pfeiffer Vacuum Technology AG, 35614 Asslar (DE)
(72) Erfinder: Mekota, Mirko, 35630 Ehringshausen (DE)
(74) Vertreter: Manitz Finsterwald Patent- und Rechtsanwaltspartnerschaft mbB

(57) **Zusammenfassung**

Ein Vakuumsystem umfasst zumindest eine Vakuumpumpe und zumindest eine Ventileinrichtung. Die Vakuumpumpe umfasst ein Pumpengehäuse, das einen Pumpeninnenraum definiert. Die Ventileinrichtung umfasst ein Wegeventil, das zumindest drei separate Anschlüsse umfasst und in zumindest zwei verschiedene Schaltstellungen bringbar ist. In zumindest einer der Schaltstellungen des Wegeventils ist zumindest ein Kanal von dem Pumpeninnenraum der Vakuumpumpe über zumindest einen der Anschlüsse des Wegeventils zu zumindest einem anderen der Anschlüsse des Wegeventils ausgebildet.

## Beschreibung

Die Erfindung betrifft ein Vakuumsystem und ein Verfahren zum Betreiben eines Vakuumsystems.

Vakuumsysteme finden in einer Vielzahl von Herstellungsverfahren und Prozessen Anwendung. Herkömmliche Vakuumsysteme enthalten in der Regel zumindest eine Vakuumpumpe, die beispielsweise an zumindest einen Rezipienten angeschlossen werden kann, um in diesem Bedingungen bereitzustellen, die in dem jeweiligen Verfahren oder Prozess benötigt werden. Diese Verfahren oder Prozesse können verschiedene Schritte umfassen. Ein Prozessschritt kann beispielsweise an der Pumpe die Bereitstellung eines Sperr- und/oder Prozessgases umfassen, während in einem anderen Schritt ein anderes Prozessgas vorgesehen ist oder die Pumpe belüftet wird muss. Zur Realisierung dieser Schritte wird eine Vielzahl von Komponenten benötigt, insbesondere Ventileinrichtungen, die die Kosten des Systems erhöhen und Bauraum beanspruchen.

Es ist daher eine Aufgabe der Erfindung, ein wirtschaftlicheres Vakuumsystem bereitzustellen.

Die vorgenannte Aufgabe wird erfindungsgemäß durch ein Vakuumsystem mit den Merkmalen des Anspruchs 1 gelöst.

Das Vakuumsystem umfasst zumindest eine Vakuumpumpe und zumindest eine Ventileinrichtung. Bevorzugt ist die zumindest eine Vakuumpumpe eine Turbomolekularvakuumpumpe.

Die Vakuumpumpe umfasst ein Pumpengehäuse, das einen Pumpeninnenraum definiert. Unter dem Pumpeninnenraum ist derjenige Teil der Pumpe zu verstehen, in dem zumindest ein Teil der pumpaktiven Komponenten der Vakuumpumpe und/oder zumindest ein Teil einer Antriebs- und/oder Lagereinheit der Vakuumpumpe angeordnet sind. Die Antriebseinheit umfasst beispielsweise einen Elektromotor. Die pumpaktiven Komponenten können eine oder mehrere Pumpstufen der Pumpe umfassen, z.B. mehrere zur Erzeugung einer Pumpwirkung zusammenwirkender Rotor- und Statorscheiben und/oder Holweck-Stufen.

Das Pumpengehäuse kann einstückig ausgestaltet sein, was für eine besonders robuste Bauform sorgt. Es ist aber auch denkbar, dass das Pumpengehäuse zwei oder mehr miteinander verbundene Gehäuseteile umfasst. Ein solches Gehäuse ist kostengünstiger herzustellen und erlaubt den Einsatz verschiedener Materialien. Gemäß einer Ausführungsform weist das Pumpengehäuse eine im Wesentlichen zylindrische Form auf und definiert eine axiale Richtung.

Die Ventileinrichtung umfasst ein, insbesondere genau ein, Wegeventil, das zumindest drei separate Anschlüsse umfasst und das in zumindest zwei verschiedene Schaltstellungen bringbar ist.

Die zumindest zwei verschiedenen Schaltstellungen umfassen beispielsweise eine erste Arbeitsstellung, eine von der ersten Arbeitsstellung verschiedene zweite Arbeitsstellung und/oder eine Sperr- oder Neutralstellung. Die erste und/oder zweite Arbeitsstellung kann eine Stellung zum Zuführen eines gasförmigen Mediums in das Vakuumsystem sein. Das gasförmige Medium umfasst zum Beispiel Luft, ein Inertgas wie z.B. Argon, Stickstoff und/oder Helium, und/oder ein Prozessgas, das z.B. beim Beschichten von Oberflächen zum Einsatz gelangt. Das heißt bevorzugt ist die erste und/oder zweite Arbeitsstellung eine Stellung zum Belüften der Vakuumpumpe, eine Stellung zum Zuführen von Prozessgas und/oder eine Stellung zum Zuführen von Sperr- oder Spülgas. Die Neutralstellung kann eine Sperrstellung sein, in der das Wegeventil geschlossen ist und der Pumpeninnenraum somit von der Umgebung getrennt ist.

Der Typ des Wegeventils kann bedarfsgerecht gewählt werden. Das Wegeventil ist zum Beispiel ein 3/2-Wegeventil (d.h. es umfasst drei Anschlüsse und ist in zwei verschiedene Schaltstellungen bringbar), ein 3/3-Wegeventil (d.h. es umfasst drei Anschlüsse und ist in drei verschiedene Schaltstellungen bringbar), ein 4/3-Wegeventil (d.h. es umfasst vier Anschlüsse und ist in drei verschiedene Schaltstellungen bringbar) oder ein 5/3-Wegeventil (d.h. es umfasst fünf Anschlüsse und ist in drei verschiedene Schaltstellungen bringbar). 3/2-Wegeventile sind besonders kostengünstig und kompakt, während Wegeventile mit drei Schaltstellungen mehr Funktionalität bieten.

Das Wegeventil kann elektrisch, pneumatisch, hydraulisch, mechanisch und/oder manuell betätigbar sein.

In zumindest einer der Schaltstellungen des Wegeventils, insbesondere in der ersten und/oder zweiten Arbeitsstellung, ist zumindest ein Kanal von dem Pumpeninnenraum der Vakuumpumpe über zumindest einen der Anschlüsse des Wegeventils zu zumindest einem anderen der Anschlüsse des Wegeventils ausgebildet. Mit anderen Worten besteht in zumindest einer der Schaltstellungen zumindest eine fluidtechnische oder vakuumtechnische Verbindung zwischen zumindest einem Teil des Pumpeninnenraums, einem Pumpenanschluss des Wegeventils und einem Gasanschluss des Wegeventils, wobei der Gasanschluss bevorzugt mit einer externen Gasquelle verbunden werden kann.

Grundsätzlich sind Wegeventile bekannt. Sie dienen beispielsweise in der Pneumatik und Hydraulik dazu, den Weg für ein Arbeitsmedium (z.B. Druckluft oder Hydraulikflüssigkeit) zu sperren oder die Durchflusswege zu ändern. Wegeventile sind zwar platzsparend. Sie sind jedoch auch mit einigen Nachteilen behaftet. Beispielsweise weisen handelsübliche Pneumatik- und Hydraulik-Wegeventile eine geringere Dichtigkeit und/oder einen größeren Querschnitt auf als Ventile, die normalerweise in der Vakuumtechnik zum Einsatz kommen.

In der der Pneumatik und Hydraulik mögen diese Nachteile beherrschbar sein oder aufgrund der dort herrschenden Bedingungen und Anforderungen nicht zu sehr ins Gewicht fallen. Der Einsatz von Wegeventilen bei Vakuumanwendungen wurde aber bislang aufgrund der vorstehend beschriebenen Nachteile dieses Ventiltyps nicht in Erwägung gezogen. Gerade die vergleichsweise geringere Dichtigkeit wurde als äußerst problematisch angesehen.

Überraschend wurde aber festgestellt, dass sich Wegeventile in manchen Fällen besser eignen als Ventile, die herkömmlicherweise in der Vakuumtechnik eingesetzt werden, da die Vorteile dieses Ventiltyps deren Nachteile kompensieren. Die Ablehnung von Wegeventilen im Bereich der Vakuumtechnik beruht also auf einem lange zementierten Vorurteil, das die Erfinder überwunden haben.

Weitere Ausführungsformen der Erfindung sind in den Ansprüchen, der Beschreibung und den beigefügten Zeichnungen angegeben.

Gemäß einer Ausführungsform umfasst das Wegeventil ein Ventilgehäuse, das teilweise in das Pumpengehäuse integriert ist. Dadurch nimmt das System besonders wenig Bauraum in Anspruch. Gemäß einer weiteren Ausführungsform ist das Wegeventil vollständig in das Pumpengehäuse integriert. Das heißt das Wegeventil umfasst kein eigenes Gehäuse, was den Aufbau des Systems noch weiter vereinfacht.

Gemäß einer Ausführungsform umfasst das Wegeventil ein Ventilgehäuse, das separat von dem Pumpengehäuse ausgebildet ist. Beispielsweise ist das Wegeventil (lösbar) direkt oder indirekt an dem Pumpengehäuse befestigt oder von dem Pumpengehäuse beabstandet angeordnet.

Für eine besonders kompakte Bauform und eine einfache Montage des Wegeventils an der Pumpe kann das Pumpengehäuse einen Montageabschnitt für das Wegeventil aufweisen, der z.B. in eine Schulter oder Anschlag begrenzt wird und/oder der eine Vertiefung aufweist, um das Ansetzten des Ventils bei dessen Montage zu vereinfachen.

Gemäß einer Ausführungsform umfasst der Pumpeninnenraum einen ersten Pumpeninnenraumabschnitt, in dem eine Antriebseinheit der Vakuumpumpe zumindest teilweise angeordnet ist. Die zumindest zwei verschiedenen Schaltstellungen, in die das Wegeventil bringbar ist, können eine erste Arbeitsstellung umfassen, in der ein erster Kanal von dem ersten Pumpeninnenraumabschnitt über den zumindest einen der Anschlüsse des Wegeventils zu dem zumindest einen anderen der Anschlüsse des Wegeventils ausgebildet ist. Bevorzug dient der erste Kanal als Kanal zur Zufuhr eines Sperrgases (engl.: "purging channel").

Der erste Kanal kann einen ersten Kanalabschnitt umfassen, der zumindest abschnittsweise oder vollständig in dem Pumpengehäuse ausgebildet ist, zum Beispiel in Form zumindest einer Bohrung. Der erste Kanalabschnitt des ersten Kanals kann zumindest abschnittsweise, bevorzugt vollständig, senkrecht zur axialen Richtung angeordnet sein.

Gemäß einer Ausführungsform umfasst die Ventileinrichtung zumindest eine erste Drosselvorrichtung, insbesondere eine Kapillarvorrichtung mit zumindest einer Kapillare. Es kann genau eine oder eine Mehrzahl von Kapillaren vorgesehen sein. Die zumindest eine Kapillare weist einen Innendurchmesser von bis zu oder gleich 100 µm, bevorzugt von kleiner oder gleich 75 µm, besonderes bevorzugt von kleiner oder gleich 50 µm, auf. Dies ist insbesondere dann von Vorteil, wenn Sperrgas zugeführt werden soll, da durch die Kapillare die Flussrate auf wenige sccm (Standardkubikzentimeter pro Minute) gedrosselt werden kann. Das heißt die Erfinder haben erkannt, dass das Wegeventil durch Zusammenwirken mit der ersten Drosselvorrichtung als Sperrgas-Ventil für Vakuumsysteme eingesetzt werden kann. Umfasst die ersten Drosselvorrichtung eine Kapillarvorrichtung, so kann der Durchfluss durch die Kapillare präzise über die Wahl des Innendurchmessers und/oder die Länge der Kapillare eingestellt werden.

Die zumindest eine Kapillare der Kapillarvorrichtung kann eine oder mehrere Glasröhrchen und/oder eine oder mehrere Rubinkugeln mit zumindest einer Durchgangsbohrung umfassen. Diese sind besonders zuverlässig.

Die erste Drosselvorrichtung kann auf einer Vakuumseite des Wegeventils und/oder auf einer Atmosphärenseite des Wegeventils angeordnet sein. Insbesondere ist die erste Drosselvorrichtung in die Ventileinrichtung integriert.

Bei der Anordnung der erste Drosselvorrichtung auf der Atmosphärenseite des Wegeventils ist bevorzugt im Wesentlichen kein oder ein nur sehr kleines Totvolumen zwischen ersten Drosselvorrichtung und einen Ventilkörper des Wegeventils vorhanden.

Gemäß einer Ausführungsform umfasst der Pumpeninnenraum einen zweiten Pumpeninnenraumabschnitt, in dem pumpaktive Komponenten der Vakuumpumpe zumindest teilweise angeordnet sind, und die zumindest zwei verschiedenen Schaltstellungen, in die das Wegeventil bringbar ist, umfassen eine zweite Arbeitsstellung, in der ein zweiter Kanal von dem zweiten Pumpeninnenraumabschnitt über den zumindest einen der Anschlüsse des Wegeventils zu dem zumindest einen anderen der Anschlüsse des Wegeventils ausgebildet ist. Der zweite Kanal kann als ein Belüftungskanal dienen (engl.: "venting channel").

Der zweite Kanal kann einen ersten Kanalabschnitt umfassen, der zumindest abschnittsweise oder vollständig in dem Pumpengehäuse ausgebildet ist, zum Beispiel in Form zumindest einer Bohrung. Der erste Kanalabschnitt des zweiten Kanals kann einen ersten Abschnitt umfassen, der senkrecht zur axialen Richtung angeordnet ist, und einen sich an den ersten Abschnitt anschließenden zweiten Abschnitt, der parallel zur axialen Richtung angeordnet ist. Das heißt der erste Kanalabschnitt des zweiten Kanals kann eine L-Form aufweisen.

Der zweite Kanal, insbesondere der erste Kanalabschnitts des zweiten Kanals, kann in eine Holweck-Pumpstufe der Vakuumpumpe münden.

Der erste Kanalabschnitt des ersten Kanals und der erste Kanalabschnitt des zweiten Kanals können räumlich und/oder funktionell voneinander getrennte Kanäle sein. Der erste Kanal und der zweite Kanal, insbesondere der erste Kanalabschnitt des ersten Kanals und der erste Kanalabschnitt des zweiten Kanals, können zumindest abschnittsweise nebeneinander und parallel zueinander angeordnet sein.

Anstelle separater erster Kanalabschnitte des ersten und des zweiten Kanals kann auch ein einziger Kanalabschnitt vorgesehen sein, der die Funktion der beiden ersten Kanalschnitte übernimmt. Er ist also sowohl der erste Kanalabschnitt des ersten Kanals als auch der erste Kanalabschnitt des zweiten Kanals.

Gemäß einer Ausführungsform ist in dem zweiten Kanal zumindest eine zweite Drosselvorrichtung angeordnet, insbesondere eine Blendenvorrichtung, die einen Blendendurchmesser von kleiner oder gleich 1,0 mm, bevorzugt kleiner oder gleich 0,75 mm, besonders bevorzugt kleiner oder gleich 0,5 mm aufweist. Dies ermöglicht ein gefahrloses Belüften der Vakuumpumpe. Insbesondere haben die Erfinder erkannt, dass das Wegeventil durch Zusammenwirken mit der zweiten Drosselvorrichtung als Belüftungsventil für Vakuumsysteme verwendet werden kann.

Die zweite Drosselvorrichtung kann auf einer Vakuumseite des Wegeventils und/oder auf einer Atmosphärenseite des Wegeventils angeordnet sein. Insbesondere ist die zweite Drosselvorrichtung in die Ventileinrichtung integriert.

Bei der Anordnung der erste Drosselvorrichtung auf der Atmosphärenseite des Wegeventils ist bevorzugt im Wesentlichen kein oder ein nur sehr kleines Totvolumen zwischen der zweiten Drosselvorrichtung und einen Ventilkörper des Wegeventils vorhanden.

Grundsätzlich ist es auch denkbar, die erste und/oder die zweite Drosselvorrichtung und/oder eine oder mehrere zusätzliche erste und/oder zweite Drosselvorrichtungen pumpenseitig vorzusehen, um die gewünschten Drosseleffekte bereitstellen zu können. Derartige Drosselvorrichtungen können in die Vakuumpumpe integriert sein, beispielsweise können sie in den ersten Kanalabschnitten des ersten und/oder des zweiten Kanals, die in dem Pumpengehäuse ausbildet sind, angeordnet sein.

Gemäß einer Ausführungsform umfasst die Vakuumpumpe genau einen Ventilanschluss und der zumindest eine der Anschlüsse des Wegeventils genau einen Pumpenanschluss, die miteinander verbunden sind. Der Ventilanschluss und der Pumpenanschluss können unmittelbar miteinander verbunden sein, zum Beispiel mittels eines Flansches. Sie können aber auch über einen Schlauch oder dergleichen miteinander verbunden sein.

Gemäß einer Ausführungsform umfasst die Vakuumpumpe zwei oder mehr, insbesondere genau zwei, separate Ventilanschlüsse und der zumindest eine der Anschlüsse des Wegeventils umfasst zwei oder mehr, insbesondere genau zwei, separate Pumpenanschlüsse, wobei jeweils einer der Ventilanschlüsse der Vakuumpumpe mit einem der Pumpenanschlüsse des Wegeventils verbunden ist.

Zumindest einer, mehrere oder alle der Ventilanschlüsse können unmittelbar mit einem jeweiligen der Pumpenanschlüsse verbunden sein, zum Beispiel mittels eines Flansches, oder über einen Schlauch oder dergleichen.

Gemäß einer Ausführungsform sind der genau eine Ventilanschluss oder die zwei oder mehr Ventilanschlüsse an einer Ausgangsseite der Vakuumpumpe angeordnet, insbesondere auf einer axialen Höhe einer Antriebseinheit der Vakuumpumpe.

Gemäß einer Ausführungsform umfasst der zumindest eine andere der Anschlüsse des Wegeventils einen oder mehr, insbesondere genau einen, genau zwei oder genau drei, separate Gasanschlüsse, über die dem Wegeventil zumindest ein gasförmiges Medium, insbesondere ein Prozessgas, ein Sperrgas und/oder ein Gas zum Belüften der Vakuumpumpe, zugeführt werden kann. Die Gasanschlüsse sind dazu eingerichtet und ausgebildet, um mit einer externen Gasquelle verbunden zu werden.

Gemäß einer Ausführungsform ist die Vakuumpumpe derart betreibbar, dass ein Auslassdruck von größer oder gleich 1 · 10⁻⁴ hPa bis kleiner oder gleich 50 hPa, bevorzugt größer oder gleich 1 · 10⁻³ hPa bis kleiner oder gleich 5 hPa erreicht wird. Die Erfinder haben festgestellt, dass sich die vorstehend beschriebenen Nachteile von Wegeventilen, insbesondere deren geringere Dichtigkeit, in diesem Druckbereich besonders wenig ins Gewicht fallen.

Insbesondere ist es vorgesehen, dass sich die Ventileinrichtung in einem Bereich befindet, an dem ein deutlich höherer Druck als der hochvakuumseitige Prozessdruck herrscht. Es ist auch möglich, die Ventileinrichtung in einem Bereich zu platzieren, in dem (annähernd) Auslassdruck herrscht.

Gemäß einer Ausführungsform umfasst das Vakuumsystem eine elektronische Steuereinheit, die dazu eingerichtet und ausgebildet ist, das Wegeventil in die zumindest zwei verschiedenen Schaltstellungen zu bringen. Das heißt das Wegeventil kann automatisch in die verschiedenen Stellungen geschaltet werden. Bevorzugt ist die elektronische Steuereinheit dazu eingerichtet und ausgebildet, das Wegeventil in die erste Arbeitsstellung, die zweite Arbeitsstellung und/oder die Neutralstellung zu bringen bzw. schalten.

Die Steuereinheit kann in das Wegeventil integriert sein, das heißt sie kann in dem Ventilgehäuse angeordnet sein. Sie kann aber auch in eine Pumpensteuerung oder eine Steuerung des Vakuumsystems integriert sein.

Gemäß einer Ausführungsform ist das Wegeventil zusätzlich oder alternativ zu einer Ansteuerung durch eine Steuereinheit manuell in die zumindest zwei verschiedenen Schaltstellungen, insbesondere in die erste Arbeitsstellung, die zweite Arbeitsstellung und/oder die Neutralstellung, bringbar. Insbesondere umfasst das Wegeventil eine manuelle Betätigungseinheit wie einen Knopf oder Hebel oder dergleichen, mit dem das Wegeventil in die zumindest zwei verschiedenen Schaltstellungen bringbar ist.

Gemäß einer Ausführungsform umfasst die Vakuumpumpe ferner einen Vorvakuumflansch, mit dem ein gasförmiges Medium, das dem Pumpeninnenraum unter Verwendung der Ventileinrichtung zuführbar ist, abgeführt werden kann.

Die vorliegende Erfindung betrifft ferner ein Verfahren zum Betreiben eines Vakuumsystems, insbesondere eines Vakuumsystems gemäß zumindest einem der zuvor beschriebenen Ausführungsformen. Das Verfahren umfasst das Schalten eines Wegeventils einer Ventileinrichtung des Vakuumsystems in eine erste Arbeitsstellung, das Zuführend eines ersten gasförmigen Mediums mit einer ersten Flussrate zu einem Pumpeninnenraum einer Vakuumpumpe des Vakuumsystems über das Wegeventil in der ersten Arbeitsstellung, das Schalten des Wegeventils in eine von der ersten Arbeitsstellung verschiedene zweite Arbeitsstellung, und das Zuführend eines zweiten gasförmigen Mediums mit einer zweiten Flussrate zu dem Pumpeninnenraum über das Wegeventil in der zweiten Arbeitsstellung. Das erste gasförmige Medium und das zweite gasförmige Medium und/oder die erste Flussrate und die zweite Flussrate unterscheiden sich voneinander.

Gemäß einer Ausführungsform umfasst das erste gasförmige Medium ein erstes Prozessgas und/oder ein erstes Sperrgas, das zweite gasförmige Medium umfasst ein von dem ersten Prozessgas verschiedenes zweites Prozessgas und/oder ein von dem ersten Sperrgas verschiedenes zweites Sperrgas, und die erste Flussrate ist kleiner oder größer als die zweite Flussrate oder die erste Flussrate und die zweite Flussrate sind zumindest im Wesentlichen gleich.

Gemäß einer Ausführungsform umfasst das Verfahren ferner das Schalten des Wegeventils in eine Neutralstellung, in der das Wegeventil geschlossen ist. Dies kann vor und/oder nach dem Schalten des Wegeventils in die erste oder zweite Arbeitsstellung erfolgen.

Die Merkmale und Vorteile der in Bezug auf die vorstehend beschriebenen Ausführungsformen des erfindungsgemäßen Vakuumsystems können mit den Merkmalen und Vorteilen des erfindungsgemäßen Verfahrens kombiniert werden. Der Ausdruck "im Wesentlichen" umfasst Abweichungen von bis zu 5%.

Der erfindungsgemäße Einsatz von Wegeventilen in Vakuumapplikationen ist besonders kostengünstig und platzsparend.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6A-10B: schematische Darstellungen von verschiedenen Ausführungsformen eines erfindungsgemäßen Vakuumsystems,
- Fig. 11: eine Querschnittsansicht einer weiteren Ausführungsform eines erfindungsgemäßen Vakuumsystems, und
- Fig. 12: eine Längsschnittansicht noch einer weiteren Ausführungsform eines erfindungsgemäßen Vakuumsystems.

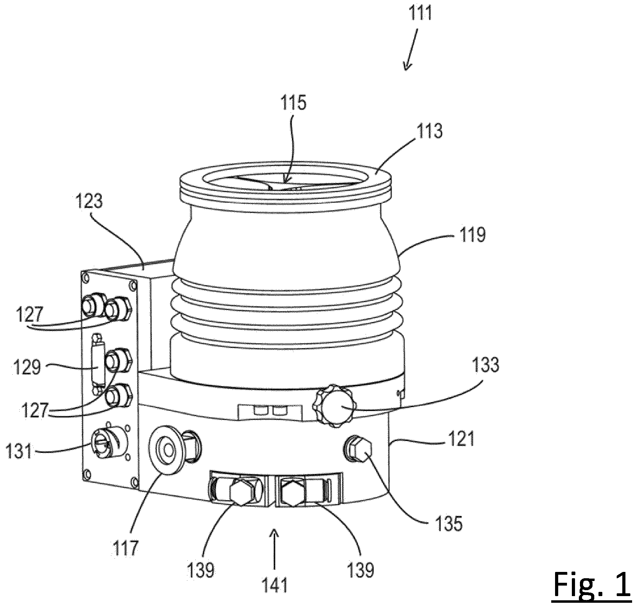

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

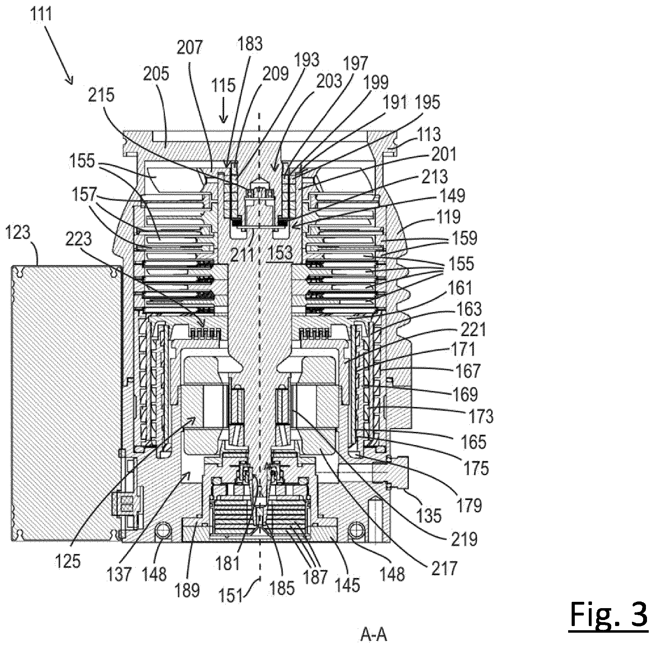

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125 (vgl. auch Fig. 3). Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Es existieren auch Turbomolekularpumpen, die kein derartiges angebrachtes Elektronikgehäuse aufweisen, sondern an eine externe Antriebselektronik angeschlossen werden.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, eingelassen werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann. Andere existierende Turbomolekularvakuumpumpen (nicht dargestellt) werden ausschließlich mit Luftkühlung betrieben.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann. Grundsätzlich sind dabei beliebige Winkel möglich.

Andere existierende Turbomolekularvakuumpumpen (nicht dargestellt), die insbesondere größer sind als die hier dargestellte Pumpe, können nicht stehend betrieben werden.

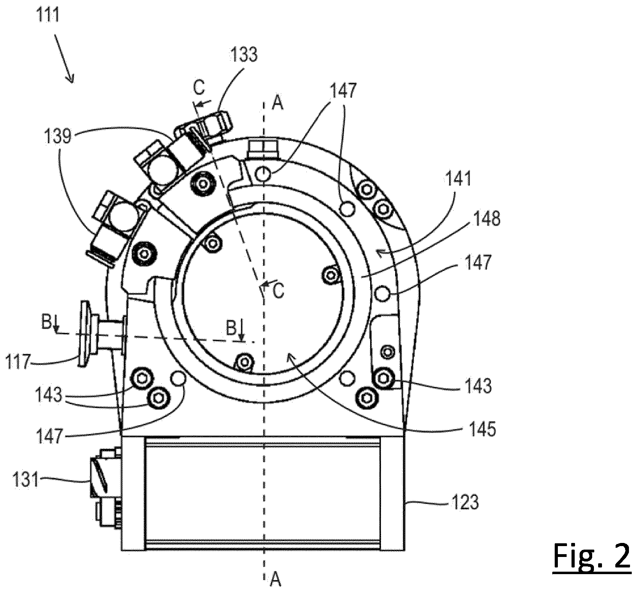

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann. Dies ist bei anderen existierenden Turbomolekularvakuumpumpen (nicht dargestellt), die insbesondere größer sind als die hier dargestellte Pumpe, nicht möglich.

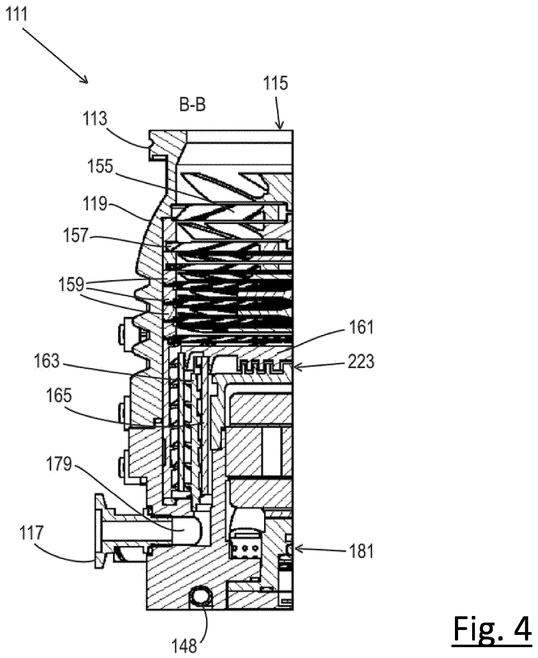

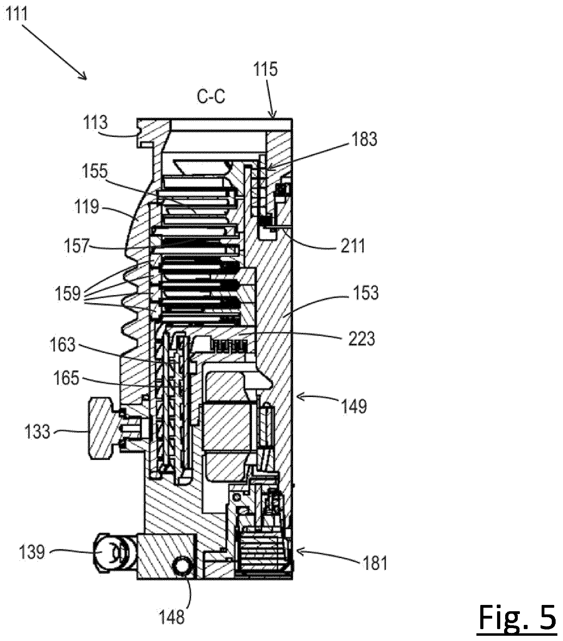

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Es existieren andere Turbomolekularvakuumpumpen (nicht dargestellt), die keine Holweck-Pumpstufen aufweisen.

Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 167, 169 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Bei anderen existierenden Turbomolekularvakuumpumpen (nicht dargestellt) kann anstelle einer Spritzmutter eine Spritzschraube vorgesehen sein. Da somit unterschiedliche Ausführungen möglich sind, wird in diesem Zusammenhang auch der Begriff "Spritzspitze" verwendet.

Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind.

Das in dem Lagerspalt 199 vorhandene magnetische Feld ruft magnetische Absto-ßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 201 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, damit eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

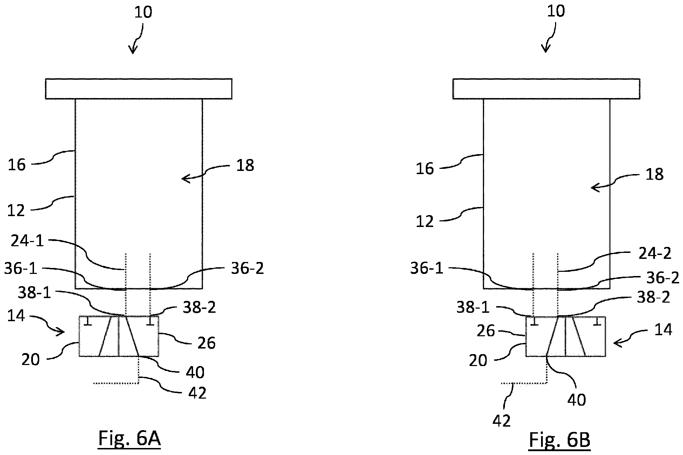

Die Fig. 6A und 6B zeigen eine erste Ausführungsform eines erfindungsgemäßen Vakuumsystems 10 in zwei verschiedenen Betriebszuständen. Das gezeigte Vakuumsystem 10 umfasst ein 3/2-Wegevenil 20 als Teil einer Ventileinrichtung 14, das ausgangsseitig an eine Vakuumpumpe 12 angeschlossen ist. Diese kann wie die in Bezug auf die Fig. 1 bis 5 beschriebene Turbomolekularpumpe 111 ausgestaltet sein. Ein anderer Pumpentyp kann jedoch auch zum Einsatz gelangen.

Die Vakuumpumpe 12 umfasst ein Pumpengehäuse 16, das einen Pumpeninnenraum 18 definiert.

Bevorzugt ist das Wegeventil 20 automatisch durch eine Steuereinheit (nicht gezeigt) betätigbar. Diese kann in das Wegeventil 20 selbst integriert sein oder Teil der Pumpen- oder Systemsteuerung sein. Auch manuell regelbare Wegeventile 20 sind denkbar, sowie solche, die nur teilweise automatisch steuerbar sind. Außerdem kann je nach Anwendungsfall mehr als nur ein Wegeventil 20 vorgesehen sein, und die Bauart des eingesetzten Wegeventils 20 kann variieren (siehe Fig. 6A bis 10C).

Das Wegeventil 20 umfasst ein Ventilgehäuse, in dem ein als Schließelement dienender Ventilkörper 26 angeordnet ist. Gemäß einer beispielhaften Ausführungsform weist das Wegeventil 20 eine Kolbenschieberbauart auf und ist elektromagnetisch betätigbar. Es versteht sich jedoch, dass die Bauart des Wegeventils 20 je nach Anwendungsfall bedarfsgerecht gewählt werden kann.

Das Wegeventil 20 umfasst außerdem einen Gasanschluss 40, über den dem Vakuumsystem 10 ein gasförmiges Medium zugeführt werden kann. Zu diesem Zweck ist der Gasanschluss 40 über eine Versorgungsleitung 42, wie zum Beispiel einen Schlauch oder dergleichen, mit einer externen Einrichtung oder Gasquelle (nicht gezeigt) verbindbar. Das Wegeventil 20 umfasst außerdem zwei separate Pumpenanschlüsse 38-1 und 38-2, die mit jeweils einem Ventilanschluss 36-1, 36-2 der Vakuumpumpe 12 verbunden sind.

Die Fig. 6A zeigt einen Zustand des Vakuumsystems 10, in dem sich das Wegeventil 20 in einer ersten Arbeitsstellung befindet, und die Fig. 6B zeigt einen weiteren Zustand des Vakuumsystems 10, in dem sich das Wegeventil 20 in einer zweiten Arbeitsstellung befindet.

In der ersten Arbeitsstellung wird über den ersten Pumpenanschluss 38-1 ein erster Kanal 24-1 gebildet, der einen ersten Abschnitt des Pumpeninnenraums 18 (z.B. einen Pumpraum, in dem pumpaktive Komponenten der Pumpe 12 angeordnet sind) mit dem Gasanschluss 40 des Wegeventils 20 verbindet. In der zweiten Arbeitsstellung wird über den zweiten Pumpenanschluss 38-2 ein zweiter Kanal 24-2 gebildet, der einen zweiten Abschnitt des Pumpeninnenraums 18 (z.B. ein Motorraum, in dem Antriebskomponenten und/oder Lager der Pumpe 12 angeordnet sind) mit dem Gasanschluss 40 des Wegeventils 20 verbindet.

Die erste Arbeitsstellung dient beispielsweise zum Belüften der Vakuumpumpe 12 ("venting") oder zur Zufuhr eines Prozessgases, während die zweite Arbeitsstellung zum Beispiel für die Zufuhr eines Sperrgases ("purging") vorgesehen ist, mit dem empfindliche Teile der Pumpe 12 vor korrosivem Prozessgas geschützt wird. Dieser Schutz wird durch einen kontinuierlichen Inertgasstrom erzeugt, der diese Teile umspült. Der Einlass von Sperrgas z.B. in den Motorraum schützt dabei sowohl vor chemischen Reaktionen aggressiver Gase mit nicht korrosionsfesten Bestandteilen und/oder Schmiermitteln als auch vor dem Eindringen von Stäuben und Partikeln.

Im gezeigten Beispiel ist die Leitung 42 mit einer einzigen Gasquelle verbunden, die z.B. Luft, N₂ oder Ar bereitstellt. Diese Gase können sowohl als Sperrgas als auch als Belüftungsgas genutzt werden.

Zum Drosseln der Flussrate im Belüftungsfall oder bei der Zufuhr von Prozessgasumfasst das Vakuumsystem 10 eine Blendenvorrichtung (nicht gezeigt). Mit dieser kann der Querschnitt des Kanals 24-1 bedarfsgerecht angepasst werden, wobei sich ein Blendendurchmesser von kleiner oder gleich 1,0 mm, insbesondere von 0,5 mm oder weniger, als besonders vorteilhaft erwiesen hat. Mit solchen Blendendurchmessern ist ein besonders kontrolliertes und gefahrloses Belüften der Pumpe 12 möglich. Die Blendenvorrichtung ist bevorzugt an einer geeigneten Stelle in einem Abschnitt des Kanals 24-1 im Bereich des Ventils 20 angeordnet, so dass sie in das Ventil 20 integriert ist. Eine - alternative oder zusätzliche - pumpenseitige Integration einer Blendenvorrichtung ist ebenfalls denkbar.

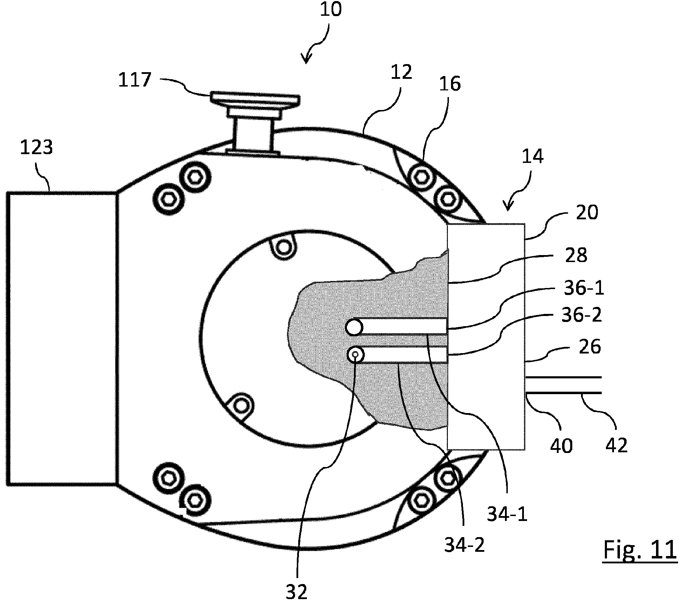

Zum Drosseln der Flussrate beim Zuführen von Sperrgas kann außerdem eine Kapillarvorrichtung mit einer oder mehreren Kapillaren vorgesehen sein. Diese kann sowohl im Bereich des Gasanschlusses 40, d.h. atmosphärenseitig, als auch in der Nähe des Pumpenanschlusses 38, d.h. vakuumseitig, angeordnet sein, wobei bei der atmosphärenseitigen Anordnung darauf zu achten ist, dass möglichst wenig Totvolumen zwischen dem Wegeventil 20 und der Kapillare 32 vorhanden ist. Bevorzugt ist die Kapillarvorrichtung in das Ventil 20 integriert. Es ist aber auch denkbar, sie in die Pumpe 12 zu integrieren (siehe Kapillare 32 in Fig. 11).

Als besonders vorteilhaft haben sich Innendurchmesser der Kapillare(n) von kleiner oder gleich 100 µm, insbesondere von 50 µm oder weniger, erwiesen. Es versteht sich jedoch, dass der Innendurchmesser je nach Art und Zusammensetzung des zuzuführenden Gases und/oder der herrschenden Druckverhältnisse gewählt werden kann. Besonders zuverlässig und kostengünstig sind Kapillaren 32, die als Glasröhrchen oder Rubinkugeln mit Durchgangsbohrung(en) ausgestaltet sind.

Die Blendenvorrichtung und die Kapillarvorrichtung sind zwar optional, ermöglichen jedoch auf einfache Weise eine bedarfsgerechte Drosselung des Gasflusses in den Kanäle 24-1, 24-2.

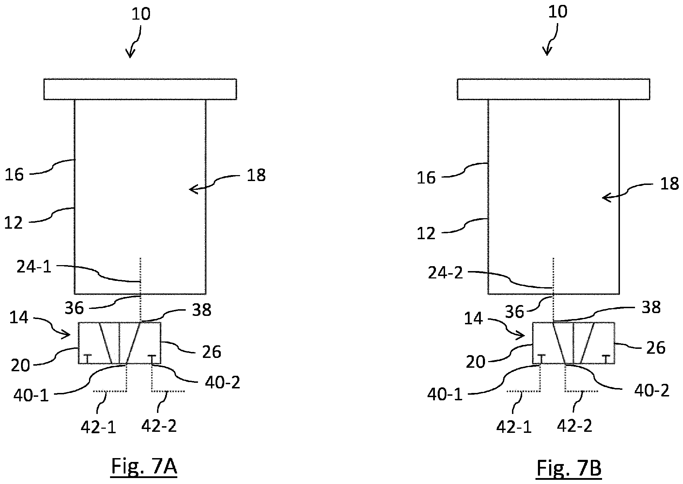

Die in den Fig. 7A und 7B gezeigte, zweite Ausführungsform des erfindungsgemäßen Vakuumsystems 10 unterscheidet sich von der in den Fig. 6A und 6B gezeigten im Wesentlichen dadurch, dass das Wegeventil 20 über nur einen Pumpenanschluss 38 und nicht über zwei separate Pumpenanschlüsse 38-1, 38-2 mit der Vakuumpumpe 12 verbunden ist. Zur Realisierung der beiden zuvor beschriebenen, verschiedenen Prozessfunktionen weist das Wegeventil 20 hier entsprechend zwei baulich separat angeordnete Anschlüsse 40-1, 40-2, die jeweils mit einer externen Gasquelle verbindbar sind, so dass unterschiedliche Gase bereitgestellt werden können.

Mit anderen Worten werden sowohl eine Belüftung/Prozessgaszufuhr als auch eine Sperrgaszufuhr über einen einzigen Ventilanschluss 36 realisiert. Es kann vorgesehen sein, dass die Belüftung des Pumpraums über den Motorraum erfolgt.

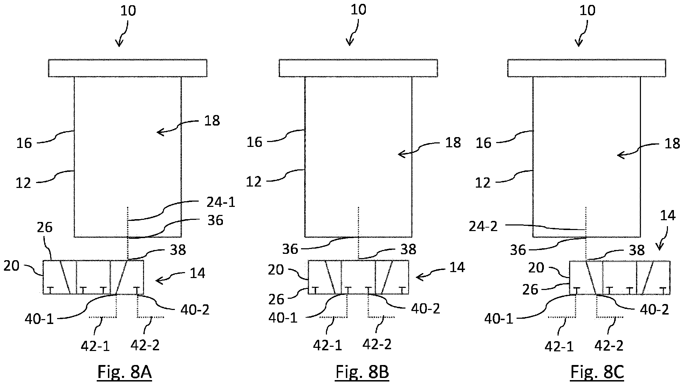

Die in den Fig. 8A bis 8C gezeigte, dritte Ausführungsform des erfindungsgemäßen Vakuumsystems 10 unterscheidet sich von der in den Fig. 7A und 7B gezeigten im Wesentlichen dadurch, dass die Ventileinrichtung 14 ein 3/3-Wegeventil umfasst. Dieses bietet den Vorteil, dass es nicht nur in zwei verschiedene Arbeitsstellungen zum Zuführen eines gasförmigen Mediums (siehe Fig. 8A - Belüftung, Prozessgaszufuhr - und 8C - Sperrgaszufuhr), sondern zusätzlich auch noch in eine Neutralstellung (siehe Fig. 8B) bringbar ist, in der das Wegeventil 20 geschlossen ist.

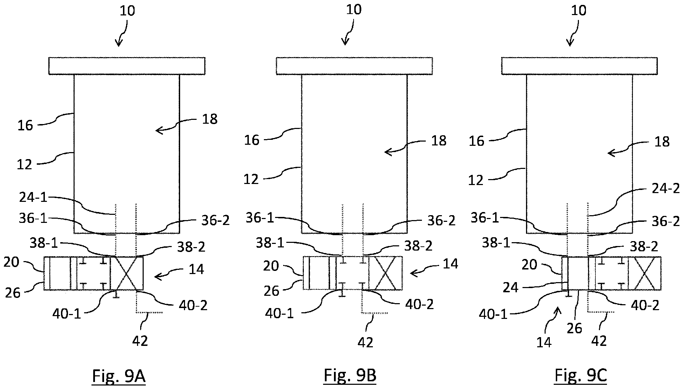

Die in den Fig. 9A bis 9C gezeigte, vierte Ausführungsform des erfindungsgemäßen Vakuumsystems 10 unterscheidet sich von der in den Fig. 8A bis 8C gezeigten im Wesentlichen dadurch, dass die Ventileinrichtung 14 ein 4/3-Wegeventil umfasst. Das heißt das Ventil 20 umfasst nicht nur zwei Gasanschlüsse 40-1, 40-2, sondern auch zwei separate Pumpenanschlüsse 38-1, 38-2. Es ist lediglich eine Versorgungsleitung 42 vorgesehen, die mit einer Gasquelle in Verbindung steht, die z.B. Luft, N₂ oder Ar bereitstellt.

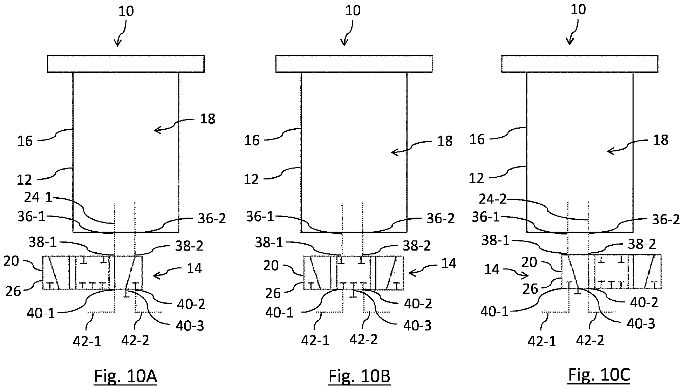

Die in den Fig. 10A bis 10C gezeigte, fünfte Ausführungsform des erfindungsgemäßen Vakuumsystems 10 unterscheidet sich von der in den Fig. 9A bis 9C gezeigten im Wesentlichen dadurch, dass das Wegeventil 20 ein 5/3-Wegeventil ist. Das heißt das Wegeventil 20 umfasst einen zusätzlichen, dritten Anschluss 40-3, um noch mehr Flexibilität zu bieten.

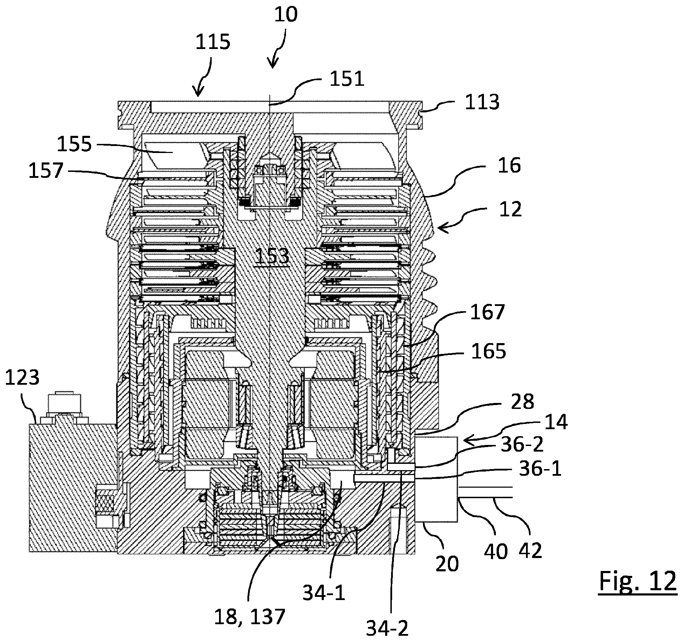

Die Fig. 11 zeigt eine schematische Querschnittsansicht (Schnitt senkrecht zur axialen Richtung) eines erfindungsgemäßen Vakuumsystems 10 gemäß zumindest einer der zuvor beschriebenen Ausführungsformen. Bei der gezeigten Ausführungsform weist die Pumpe 12 zwei Ventilanschlüsse 36-1, 36-2 auf, die jeweils mit einem ersten Kanalabschnitt 34-1, 34-2 in Verbindung stehen. Die Kanalabschnitte 34-1, 34-2 sind in dem Pumpengehäuse 16 ausgebildet, z.B. als Bohrungen. Sie sind nebeneinander und zumindest abschnittsweise parallel angeordnet. Außerdem sind die ersten Kanalabschnitte 34-1, 34-2 zumindest abschnittsweise auf derselben axialen Höhe der Pumpe 12 angeordnet. Sie können aber auch in axialer Richtung versetzt zueinander angeordnet sein (siehe Fig. 12).

In der gezeigten Ausführungsform ist in dem Kanalabschnitt 34-2 eine Kapillare 32 zum Drosseln der Flussrate angeordnet.

Die Ventileinrichtung 14 ist direkt an der Pumpe 12 lösbar befestigt, nämlich an einem Montageabschnitt 28 des Pumpengehäuses 16, so dass die Ventilanschlüsse 36-1, 36-2 in Kontakt mit den Pumpanschlüssen 38-1 bzw. 38-2 (nicht gezeigt) stehen.

Fig. 12 zeigt einen Längsschnitt einer weiteren Ausführungsform der Pumpe 12. Das Wegeventil 20 ist wieder an einem Montageabschnitt 28 des Pumpengehäuses 16 montiert. Der Montageabschnitt 28 liegt in etwa auf Höhe eines unteren Bereichs des Motorraumes 137 des Pumpeninnenraums 18 .

In der gezeigten Ausführungsform mündet der Kanalabschnitt 34-1 in den Motorraum 137 und ist daher ein Kanal zum Zuführen von Sperrgas. Der zweite Kanalabschnitt 34-2 mündet in eine Holweck-Pumpstufe der Vakuumpumpe 12 und ist daher bevorzugt ein Kanal zum Belüften der Vakuumpumpe 12.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 10: Vakuumsystem
- 12: Vakuumpumpe
- 14: Ventileinrichtung
- 16: Pumpengehäuse
- 18: Pumpeninnenraum
- 20: Wegeventil
- 24: Kanal
- 26: Ventilkörper
- 28: Montageabschnitt
- 32: Kapillare
- 34: erster Kanalabschnitt
- 36: Ventilanschluss
- 38: Pumpenanschluss
- 40: Gasanschluss
- 42: Versorgungsleitung

## Patentansprüche

1. Vakuumsystem (10) umfassend zumindest eine Vakuumpumpe (12), insbesondere zumindest eine Turbomolekularvakuumpumpe (111), und zumindest eine Ventileinrichtung (14),
wobei die Vakuumpumpe (12) ein Pumpengehäuse (16) umfasst, das einen Pumpeninnenraum (18) definiert,
wobei die Ventileinrichtung (14) ein Wegeventil (20) umfasst, das zumindest drei separate Anschlüsse (38, 40) umfasst und in zumindest zwei verschiedene Schaltstellungen bringbar ist, und
wobei in zumindest einer der Schaltstellungen des Wegeventils (20) zumindest ein Kanal (24) von dem Pumpeninnenraum (18) der Vakuumpumpe (12) über zumindest einen der Anschlüsse (38) des Wegeventils (20) zu zumindest einem anderen der Anschlüsse (40) des Wegeventils (20) ausgebildet ist.

2. Vakuumsystem (10) nach Anspruch 1,
wobei das Wegeventil (20) ein Ventilgehäuse (26) umfasst, das teilweise in das Pumpengehäuse (16) integriert ist oder das separat von dem Pumpengehäuse (16) ausgebildet ist.

3. Vakuumsystem (10) nach Anspruch 1,
wobei das Wegeventil (20) vollständig in das Pumpengehäuse (16) integriert ist.

4. Vakuumsystem (10) nach zumindest einem der vorherigen Ansprüche, wobei der Pumpeninnenraum (18) einen ersten Pumpeninnenraumabschnitt umfasst, in dem eine Antriebseinheit der Vakuumpumpe (12) zumindest teilweise angeordnet ist,
wobei die zumindest zwei verschiedenen Schaltstellungen, in die das Wegeventil (20) bringbar ist, eine erste Arbeitsstellung umfassen, in der ein erster Kanal (24-1) von dem ersten Pumpeninnenraumabschnitt über den zumindest einen der Anschlüsse (38) des Wegeventils (20) zu dem zumindest einen anderen der Anschlüsse (40) des Wegeventils (20) ausgebildet ist.

5. Vakuumsystem (10) nach Anspruch 4,
wobei die Ventileinrichtung (14) zumindest eine erste Drosselvorrichtung umfasst, insbesondere eine Kapillarvorrichtung mit zumindest einer Kapillare (32), wobei die Kapillare einen Innendurchmesser von kleiner oder gleich 100 µm, bevorzugt kleiner oder gleich 75 µm, besonders bevorzugt kleiner oder gleich 50 µm, aufweist.

6. Vakuumsystem (10) nach Anspruch 5,
wobei die zumindest eine Kapillare (32) der Kapillarvorrichtung eine oder mehrere Glasröhrchen und/oder eine oder mehrere Rubinkugeln mit zumindest einer Durchgangsbohrung umfasst.

7. Vakuumsystem (10) nach zumindest einem der vorherigen Ansprüche, wobei der Pumpeninnenraum (18) einen zweiten Pumpeninnenraumabschnitt umfasst, in dem pumpaktive Komponenten der Vakuumpumpe (12) zumindest teilweise angeordnet sind,
wobei die zumindest zwei verschiedenen Schaltstellungen, in die das Wegeventil (20) bringbar ist, eine zweite Arbeitsstellung umfassen, in der ein zweiter Kanal (24-2) von dem zweiten Pumpeninnenraumabschnitt über den zumindest einen der Anschlüsse (38) des Wegeventils (20) zu dem zumindest einen anderen der Anschlüsse (40) des Wegeventils (20) ausgebildet ist.

8. Vakuumsystem (10) nach Anspruch 7,
wobei in dem zweiten Kanal (24-2) zumindest eine zweite Drosselvorrichtung angeordnet ist, insbesondere einen Blendenvorrichtung, die einen Blendendurchmesser von kleiner oder gleich 1,0 mm, bevorzugt von kleiner oder gleich 0,75 mm, besonders bevorzugt von kleiner oder gleich 0,5 mm aufweist.

9. Vakuumsystem (10) nach zumindest einem der vorherigen Ansprüche, wobei die zumindest zwei verschiedenen Schaltstellungen, in die das Wegeventil (20) bringbar ist, eine Neutralstellung umfassen, in der das Wegeventil (20) geschlossen ist.

10. Vakuumsystem (10) nach zumindest einem der vorherigen Ansprüche, wobei die Vakuumpumpe (12) genau einen Ventilanschluss (36) umfasst und der zumindest eine der Anschlüsse (22-1) des Wegeventils (20) genau einen Pumpenanschluss (38) umfasst, die miteinander verbunden sind.

11. Vakuumsystem (10) nach zumindest einem der vorherigen Ansprüche, wobei die Vakuumpumpe (12) zwei oder mehr, insbesondere genau zwei, separate Ventilanschlüsse (36-1, 36-2) umfasst und der zumindest eine der Anschlüsse (38) des Wegeventils (20) zwei oder mehr, insbesondere genau zwei, separate Pumpenanschlüsse (38-1, 38-2) umfasst, wobei jeweils einer der Ventilanschlüsse (36-1, 36-2) der Vakuumpumpe (12) mit einem der Pumpenanschlüsse (38-1, 38-2) des Wegeventils (20) verbunden ist.

12. Vakuumsystem (10) nach Anspruch 10 oder 11,
wobei der genau eine Ventilanschluss (36) oder die zwei oder mehr Ventilanschlüsse (36) an einer Ausgangsseite der Vakuumpumpe (12) angeordnet sind, insbesondere auf einer axialen Höhe einer Antriebseinheit der Vakuumpumpe (12).

13. Vakuumsystem (10) nach zumindest einem der vorherigen Ansprüche, wobei der zumindest eine andere der Anschlüsse (40) des Wegeventils (20) einen oder mehr, insbesondere genau einen, genau zwei oder genau drei, separate Gasanschlüsse (40-1, 40-2, 40-3) umfasst, über die dem Wegeventil (20) zumindest ein gasförmiges Medium, insbesondere ein Prozessgas, ein Sperrgas und/oder ein Gas zum Belüften der Vakuumpumpe (12), insbesondere Luft, zugeführt werden kann.

14. Vakuumsystem (10) nach zumindest einem der vorherigen Ansprüche, wobei die Vakuumpumpe (12) bei einem Auslassdruck von größer oder gleich 1 · 10⁻⁴ hPa bis kleiner oder gleich 50 hPa, bevorzugt größer oder gleich 1 · 10⁻³ hPa bis kleiner oder gleich 5 hPa, betreibbar ist.

15. Verfahren zum Betreiben eines Vakuumsystems (10), insbesondere eines Vakuumsystems (10) gemäß zumindest einem der vorherigen Ansprüche, wobei das Verfahren umfasst:
Schalten eines Wegeventils (20) einer Ventileinrichtung (14) des Vakuumsystems (10) in eine erste Arbeitsstellung,
Zuführend eines ersten gasförmigen Mediums mit einer ersten Flussrate zu einem Pumpeninnenraum (18) einer Vakuumpumpe (12) des Vakuumsystems (10) über das Wegeventil (20) in der ersten Arbeitsstellung,
Schalten des Wegeventils (20) in eine von der ersten Arbeitsstellung verschiedene zweite Arbeitsstellung, und
Zuführend eines zweiten gasförmigen Mediums mit einer zweiten Flussrate zu dem Pumpeninnenraum (18) über das Wegeventil (20) in der zweiten Arbeitsstellung,
wobei sich das erste gasförmige Medium und das zweite gasförmige Medium und/oder die erste Flussrate und die zweite Flussrate unterscheiden.
